# EUROPÄISCHE PATENTANMELDUNG

(11) **EP 4 407 806 A1**
(43) Veröffentlichungstag der Anmeldung: **31.07.2024**
(21) Anmeldenummer: 23153774.7
(22) Anmeldetag: 27.01.2023
(51) Int. Cl.: H01R 4/30

(54) **VERBINDUNGSANORDNUNG, VERBINDUNGSSYSTEM UND VERFAHREN ZUR VERBINDUNG ZWEIER ELEKTRISCHER LEITER**

(71) Anmelder: Rosenberger Hochfrequenztechnik GmbH & Co. KG, 83413 Fridolfing (DE)
(72) Erfinder: Hegenauer, Johannes, 83346 Bergen (DE); Keiner, Stefan, 83334 Inzell (DE)
(74) Vertreter: Lorenz, Matthias

(57) **Zusammenfassung**

Die Erfindung betrifft eine Verbindungsanordnung (4) zur Verbindung eines ersten elektrischen Leiters (2) mit einem zweiten elektrischen Leiter (3), aufweisend ein in einen Durchbruch (9a) des ersten elektrischen Leiters (2) einführbares erstes Befestigungselement (6), das eine Abstützfläche (11a) aufweist, mit der es sich auf einer von dem zweiten elektrischen Leiter (3) abgewandten Seite des ersten elektrischen Leiters (2) abzustützen vermag, und ein zweites Befestigungselement (7), das eine Abstützfläche (11b) aufweist, mit der es sich auf einer von dem ersten elektrischen Leiter (2) abgewandten Seite des zweiten elektrischen Leiters (3) abzustützen vermag. Das erste Befestigungselement (6) und das zweite Befestigungselement (7) bilden eine gemeinsame primäre Gewindeverbindung (18) aus, um in einem miteinander verschraubten Zustand den ersten elektrischen Leiter (2) kraftschlüssig und elektrisch mit dem zweiten elektrischen Leiter (3) zu verbinden. Es ist vorgesehen, dass das erste Befestigungselement (6) eine mechanische Verbindungsschnittstelle (13) für eine verliersichere Verbindung mit dem ersten elektrischen Leiter (2) aufweist.

## Beschreibung

Die Erfindung betrifft eine Verbindungsanordnung zur Verbindung eines ersten elektrischen Leiters mit einem zweiten elektrischen Leiter, aufweisend ein erstes Befestigungselement und ein zweites Befestigungselement, wobei das erste Befestigungselement und das zweite Befestigungselement eine gemeinsame primäre Gewindeverbindung ausbilden, um in einem miteinander verschraubten Zustand den ersten elektrischen Leiter kraftschlüssig und elektrisch mit dem zweiten elektrischen Leiter zu verbinden, gemäß dem Oberbegriff des Anspruchs 1.

Die Erfindung betrifft außerdem ein Verbindungssystem, insbesondere ein Verbindungssystem für die Hochvolttechnik, aufweisend eine Verbindungsanordnung und zwei elektrische Leiter.

Die Erfindung betrifft ferner ein Verfahren zur Verbindung eines ersten elektrischen Leiters mit einem zweiten elektrischen Leiter.

Die Bereitstellung einer sicheren und langlebigen bzw. robusten elektrischen Verbindung zwischen stromführenden elektrischen Leitern ist insbesondere in der Hochvolttechnik bedeutungsvoll. Hochvoltverbindungen werden beispielsweise im Fahrzeugbereich eingesetzt, vor allem bei Elektro- und/oder Hybridfahrzeugen, um eine Fahrzeugbatterie mit Ladestrom zu versorgen, die gespeicherte Energie aus der Batterie zu entnehmen und dem elektrischen Antrieb zuzuführen oder um mehrere Batteriemodule elektrisch miteinander zu verbinden. Diese elektrischen Verbindungen müssen dauerhaft eine einwandfreie Übertragung hoher Ströme bei vorzugsweise geringer Transferimpedanz gewährleisten.

Kontaktelemente und Stromschienen sind häufig aus Kupfer oder Aluminium hergestellt. Aufgrund vergleichsweise hoher Ermüdungserscheinungen (Relaxation) dieser Werkstoffe kann über eine direkte Schraubverbindung zwischen den beiden elektrischen Leitern in der Regel keine mechanisch stabile, dauerhaft sichere elektrische und mechanische Verbindung hergestellt werden.

Ein unmittelbares gegenseitiges Verpressen der elektrischen Leiter kann zwar zu einer mechanisch stabileren Verbindung führen, hierdurch können Beschädigungen (z. B. Mikrorisse) der Kontaktflächen der elektrischen Leiter aber nicht immer ausgeschlossen werden, was einen erhöhten Übergangswiderstand zwischen den elektrischen Leitern bedingen kann. Beispielsweise eine Presspassung wird daher in der Hochvolttechnik häufig vermieden.

Schließlich sind noch mechanische kraftschlüssige Verbindungen zwischen zwei elektrischen Leitern bekannt (beispielsweise zwischen zwei Stromschienen), bei denen die elektrischen Leiter mittels Schraub- und Klemmelementen aneinandergepresst werden. Hierzu sind allerdings viele Einzelkomponenten erforderlich, was den Montageaufwand, die Herstellungskosten und die Fehleranfälligkeit bei der Montage erhöht.

In Anbetracht des bekannten Stands der Technik besteht die Aufgabe der vorliegenden Erfindung darin, eine Verbindungsanordnung bereitzustellen, mittels der zwei elektrische Leiter mit geringem Montageaufwand und vorzugsweise geringem Übergangswiderstand dauerhaft und sicher kraftschlüssig miteinander verbindbar sind.

Der vorliegenden Erfindung liegt auch die Aufgabe zugrunde, ein Verbindungssystem bereitzustellen, bei dem zwei elektrische Leiter mit vorzugsweise geringem Übergangswiderstand dauerhaft und sicher kraftschlüssig miteinander verbunden sind, insbesondere bei geringem Montageaufwand.

Außerdem ist es Aufgabe der Erfindung, ein Verfahren zur dauerhaften und sicheren Verbindung zweier elektrischer Leiter bereitzustellen, insbesondere bei geringem Montageaufwand und vorzugsweise geringem Übergangswiderstand.

Die Aufgabe wird für die Verbindungsanordnung mit den in Anspruch 1 aufgeführten Merkmalen gelöst. Hinsichtlich des Verbindungssystems wird die Aufgabe durch die Merkmale des Anspruchs 10 gelöst. Betreffend das Verfahren wird die Aufgabe durch Anspruch 15 gelöst.

Die abhängigen Ansprüche und die nachfolgend beschriebenen Merkmale betreffen vorteilhafte Ausführungsformen und Varianten der Erfindung.

Es ist eine Verbindungsanordnung zur Verbindung eines ersten elektrischen Leiters mit einem zweiten elektrischen Leiter vorgesehen. Der erste elektrische Leiter und der zweite elektrische Leiter werden nachfolgend mitunter zusammengefasst auch als "die elektrischen Leiter" bzw. "die beiden elektrischen Leiter" bezeichnet. Die elektrischen Leiter sind vorzugsweise nicht als Komponenten der Verbindungsanordnung zu verstehen.

Bei den elektrischen Leitern handelt es sich vorzugsweise um elektrische Leiter, die sich zur Führung hoher elektrischer Ströme aus dem Hochvoltbereich eignen (z. B. für einen elektrischen Strom von bis zu 100 Ampere, bis zu 200 Ampere, bis zu 300 Ampere, bis zu 400 Ampere, bis zu 500 Ampere, bis zu 600 Ampere, bis zu 2.000 Ampere oder mehr), bei vorzugsweise hohen elektrischen Spannungen (z. B. bis zu 500 Volt, bis zu 600 Volt, bis zu 700 Volt, bis zu 800 Volt, bis zu 900 Volt, bis zu 1.000 Volt, bis zu 1.100 Volt, bis zu 1.500 Volt, bis zu 2.000 Volt oder mehr). Die Verbindungsanordnung eignet sich daher beispielsweise vorteilhaft zur Verwendung in der Fahrzeugtechnik, besonders bevorzugt im Bereich der Elektromobilität.

Der Leiterquerschnitt der elektrischen Leiter kann beispielsweise bis zu 10 mm², vorzugsweise bis zu 30 mm², besonders bevorzugt bis zu 60 mm², noch weiter bevorzugt bis zu 90 mm², beispielsweise auch bis zu 200 mm² oder mehr betragen. Insbesondere kann ein Leiterquerschnitt vorgesehen sein, der sich für eine elektrische Energieübertragung in der Hochvolttechnik eignet, also zur Übertragung hoher elektrischer Ströme (beispielsweise 100 Ampere bis 2.000 Ampere) bei Wechselspannungen von 30 Volt bis 1.000 Volt oder mehr oder Gleichspannungen von 60 Volt bis 2.000 Volt oder mehr, insbesondere in der Fahrzeugtechnik.

Bei den elektrischen Leitern kann es sich um elektrische Leiter derselben Bauweise, gegebenenfalls aber auch um elektrische Leiter verschiedener Bauweise handeln.

Bei dem ersten elektrischen Leiter und/oder dem zweiten elektrischen Leiter kann es sich insbesondere um ein elektrisches Kontaktelement handeln, wie beispielsweise eine Stromschiene, ein Kontaktanschlusselement, einen Kabelschuh, einen plattenförmig kompaktierten elektrischen Leiter eines elektrischen Kabels (z. B. eine plattenförmige kompaktierte Litze), eine Kontakthülse oder einen sonstigen elektrischen Kontakt. Die Erfindung eignet sich besonders vorteilhaft zur Verbindung zweier vornehmlich flacher elektrischer Leiter bzw. Kontaktelemente über eine jeweilige, vornehmlich flache Kontaktfläche, insbesondere eine Seitenfläche des elektrischen Leiters bzw. Kontaktelements. Die Kontaktfläche kann gegebenenfalls auch abgerundet sein oder einen stufigen oder sonstigen Verlauf aufweisen.

Erfindungsgemäß weist die Verbindungsanordnung ein in einen Durchbruch des ersten elektrischen Leiters einführbares erstes Befestigungselement auf.

Das erste Befestigungselement kann mit einem zur mechanischen Verbindung vorgesehenen Endabschnitt, der nachfolgend auch als "Schaftabschnitt" bezeichnet wird, zumindest abschnittsweise in den Durchbruch des ersten Leiters einführbar sein. In einem vollständig montierten Zustand des ersten Befestigungselements ist dieses mit besagtem Schaftabschnitt vorzugsweise vollständig in dem Durchbruch aufgenommen; optional kann der Schaftabschnitt an dem gegenüberliegenden Ende des Durchbruchs aber auch aus dem Durchbruch teilweise herausragen. Die axiale Länge des Schaftabschnittes des ersten Befestigungselements kann somit kürzer sein als die axiale Tiefe des Durchbruchs, der axialen Tiefe des Durchbruchs entsprechen oder aber auch länger sein als die axiale Tiefe des Durchbruchs.

Erfindungsgemäß weist das erste Befestigungselement eine Abstützfläche auf, mit der es sich auf einer von dem zweiten elektrischen Leiter abgewandten Seite des ersten elektrischen Leiters abzustützen vermag.

Der Schaftabschnitt des ersten Befestigungselements kann sich vorzugsweise unmittelbar ausgehend von der Abstützfläche entlang der Montagerichtung des ersten Befestigungselements erstrecken. Das erste Befestigungselement kann insbesondere eine Anlageschulter aufweisen, an deren dem ersten elektrischen Leiter zugewandten Stirnseite die Abstützfläche ausgebildet ist, vorzugsweise ringförmig umlaufend. Das erste Befestigungselement kann vorzugsweise an seinem dem Schaftabschnitt gegenüberliegenden Ende einen Kopfabschnitt aufweisen, insbesondere in der Art eines Schraubenkopfes, um die Anlagefläche bzw. die Anlageschulter auszubilden.

In seinem vollständig montierten Zustand ist das erste Befestigungselement vorzugsweise mit dem Schaftabschnitt in dem Durchbruch des ersten elektrischen Leiters aufgenommen und liegt mit der Abstützfläche auf der von dem zweiten elektrischen Leiter abgewandten Seitenfläche des ersten elektrischen Leiters an (nachfolgend auch als Verbindungsfläche des ersten elektrischen Leiters bezeichnet).

Auf vorteilhafte Weise ist es vorliegend möglich, die Montage des ersten Befestigungselements und/oder des zweiten Befestigungselements ausgehend von den von den Kontaktflächen der elektrischen Leiter abgewandten Seiten zu montieren. Eine Berührung der Kontaktfläche oder gar ein Abstützen oder Gegenhalten auf der Kontaktfläche mit beispielsweise einem Montagewerkzeug und eine damit einhergehende, potentielle Beschädigung der Kontaktfläche ist dadurch vorzugsweise ausgeschlossen.

Erfindungsgemäß umfasst die Verbindungsanordnung ein zweites Befestigungselement, das eine Abstützfläche aufweist, mit der es sich auf einer von dem ersten elektrischen Leiter abgewandten Seite des zweiten elektrischen Leiters abzustützen vermag.

Es kann vorgesehen sein, dass sich die Abstützfläche des ersten Befestigungselements und/oder des zweiten Befestigungselements unmittelbar an dem jeweiligen elektrischen Leiter abzustützen vermag. Auch eine mittelbare Abstützung kann allerdings vorgesehen sein, beispielsweise durch eines oder mehrere zusätzliche Komponenten (z. B. Unterlegscheiben, Montageprofile, Montageplatten oder Stützhülsen), die zwischen Befestigungselement und elektrischem Leiter angeordnet sind, beispielsweise um eine Anlagefläche zu vergrößern. Die Abstützfläche kann sich monolithisch aus dem Befestigungselement ergeben; gegebenenfalls kann das Befestigungselement allerdings auch als Baugruppe mehrerer Komponenten ausgebildet sein, wobei Anlagefläche und Schaftabschnitt beispielsweise mehrteilig ausgebildet sind.

An dieser Stelle sei erwähnt, dass Merkmale, die hinsichtlich des ersten Befestigungselements beschrieben wurden, auch auf das zweite Befestigungselement übertragen werden können (und umgekehrt) - insofern dies technisch nicht ausgeschlossen ist. Insbesondere die Merkmale bezüglich der Abstützfläche, Anlageschulter und dem Kopfabschnitt, die vorstehend hinsichtlich des ersten Befestigungselements beschrieben wurden, sind auch auf das zweite Befestigungselement übertragbar.

Das erste Befestigungselement und das zweite Befestigungselement werden nachfolgend mitunter auch als "die Befestigungselemente" oder "die beiden Befestigungselemente" bezeichnet.

Vorzugsweise weist die Verbindungsanordnung zur Verbindung der beiden elektrischen Leiter ausschließlich das erste Befestigungselement und das zweite Befestigungselement und keine weiteren Befestigungselemente auf. Es ist ein besonderer Vorteil der Erfindung, dass bereits zwei Befestigungselemente zur Herstellung der Verbindung der elektrischen Leiter ausreichend sein können, was den Montageaufwand und die Herstellungskosten der Verbindungsanordnung verringert.

Erfindungsgemäß ist vorgesehen, dass das erste Befestigungselement und das zweite Befestigungselement eine gemeinsame primäre Gewindeverbindung ausbilden, um in einem miteinander verschraubten Zustand den ersten elektrischen Leiter kraftschlüssig und elektrisch mit dem zweiten elektrischen Leiter zu verbinden (vorzugsweise unmittelbar, gegebenenfalls aber auch nur mittelbar, wie nachfolgend anhand des Beispiels einer Kontakthülse beschrieben).

Die einander zugewandten Seiten der elektrischen Leiter, die erfindungsgemäß kraftschlüssig und elektrisch miteinander verbunden werden, werden im Rahmen der nachfolgenden Beschreibung mitunter auch als "Kontaktflächen" bezeichnet. Bei den Kontaktflächen handelt es sich vorzugsweise um Seitenflächen der elektrischen Leiter. Die Kontaktflächen können aber auch durch eine Stirnfläche des elektrischen Leiters ausgebildet sein.

Es wird somit vorgeschlagen, die kraftschlüssige Verbindung zwischen den elektrischen Leitern durch das Verschrauben der beiden Befestigungselemente zu erzeugen. Die Klemm- bzw. Presskraft kann durch die Schraubverbindung einerseits äußerst hoch und zudem besonders präzise einstellbar sein. In dem vollständig verschraubten bzw. verklemmten Zustand liegen vorzugsweise die jeweiligen Abstützflächen der Befestigungselemente an den entsprechenden elektrischen Leitern an.

Die Befestigungselemente können jeweilige primäre Gewindeelemente aufweisen (nachfolgend als primäres Innengewinde und primäres Außengewinde bezeichnet), um die primäre Gewindeverbindung auszubilden.

Für die Realisierung der primären Gewindeverbindung zwischen den beiden Befestigungselementen können im Rahmen der vorliegenden Erfindung insbesondere zwei alternative Varianten vorgesehen sein.

Gemäß einer später noch ausführlicher beschriebenen, ersten Variante kann das zweite Befestigungselement an einem Endabschnitt, der den elektrischen Leitern zugewandt ist, einen Schaftabschnitt ausbilden. Der Schaftabschnitt kann sich ausgehend von der Abstützfläche des zweiten Befestigungselements entlang der Montagerichtung des zweiten Befestigungselements erstrecken. Bei dem zweiten Befestigungselement kann es sich bei dieser Variante insbesondere um ein schraubenartiges Befestigungselement handeln. Das zweite Befestigungselement kann daher mit seinem Schaftabschnitt in dem ersten Befestigungselement verschraubt werden.

Alternativ zu einem Schaftabschnitt kann gemäß einer später noch ausführlicher beschriebenen, zweiten Variante allerdings auch vorgesehen sein, dass das zweite Befestigungselement eine entlang der Montagerichtung verlaufende Befestigungsausnehmung aufweist. Bei dem zweiten Befestigungselement kann es sich bei dieser Variante insbesondere um ein schraubenmutterartiges Befestigungselement handeln. Das erste Befestigungselement kann daher mit seinem Schaftabschnitt in besagter Befestigungsausnehmung des zweiten Befestigungselements verschraubt werden. Die Abstützfläche des schraubenmutterartigen zweiten Befestigungselements kann in diesem Fall vorzugsweise durch einen Anlageflansch der Schraubenmutter ausgebildet sein.

Erfindungsgemäß ist vorgesehen, dass das erste Befestigungselement eine mechanische Verbindungsschnittstelle für eine verliersichere Verbindung mit dem ersten elektrischen Leiter aufweist.

Vorzugsweise ist das erste Befestigungselement und/oder das zweite Befestigungselement nicht mit dem ersten elektrischen Leiter verpresst, insbesondere nicht in den Durchbruch des ersten elektrischen Leiters eingepresst. Vorzugsweise ist das erste Befestigungselement und/oder das zweite Befestigungselement nicht mit dem zweiten elektrischen Leiter verpresst, insbesondere nicht in den nachfolgend noch genannten Durchbruch des zweiten elektrischen Leiters eingepresst. Vorzugsweise ist für die Verbindung zwischen den Befestigungselementen und den elektrischen Leitern keine Presspassung vorgesehen. Dies kann vorteilhaft sein, da ein Einpressen, selbst wenn dieses ausgehend von der von der Kontaktfläche abgewandten Seite erfolgt, in der Regel zumindest ein Gegenhalten auf der Kontaktfläche erfordert, was jedoch die Kontaktfläche beschädigen kann.

Es ist ein Vorteil der Erfindung, dass das erste Befestigungselement zunächst mit dem ersten elektrischen Leiter verliersicher verbindbar ist, vorzugsweise ohne jegliches Einpressen innerhalb des Durchbruchs des ersten elektrischen Leiters. Auf diese Weise können Schäden des elektrischen Leiters, insbesondere im Bereich der Kontaktfläche, vermieden werden, die ansonsten zu Problemen bei der Stromübertragung zwischen den elektrischen Leitern führen können, wie dies beispielsweise bei einer Presspassung oder Nietverbindung mitunter vorkommen kann. Der Übergangswiderstand kann durch die vorgeschlagene kraftschlüssige Verbindung daher besonders gering ausfallen. Die vorgeschlagene Verbindungsanordnung kann zu einer langlebigen und robusten Verbindung der elektrischen Leiter führen.

Unter einer "verliersicheren Verbindung" ist im Rahmen der vorliegenden Erfindung insbesondere die Verliersicherheit in Bezug auf die anschließenden Montageschritte und/oder einen gemeinsamen Auslieferungszustand von erstem elektrischem Leiter und erstem Befestigungselement zu verstehen. Die mechanische Schnittstelle sollte daher zumindest eine Verliersicherheit in Bezug auf eine Lagerung, einen Transport und/oder die während der Montage zu erwartenden Arbeitsschritte bereitstellen, bis die Verliersicherung schließlich durch das Verschrauben mit dem zweiten Befestigungselement übernommen oder unterstützt wird. Die verliersichere Verbindung kann vorzugsweise eine vorübergehende Vorfixierung darstellen - zumindest für einen (kurzen) Übergangszeitraum. Auf die Robustheit und Beständigkeit der verliersicheren Verbindung muss im Gegensatz zu der späteren Endfixierung daher in der Regel keine Rücksicht genommen werden. Etwaiges Ermüdungsverhalten bei der verliersicheren Vorfixierung kann mitunter außer Acht gelassen werden.

Dadurch, dass das erste Befestigungselement zunächst verliersicher mit dem ersten elektrischen Leiter verbindbar ist, kann der Montageaufwand der Verbindungsanordnung bzw. des Verbindungssystems besonders gering sein.

Der wesentliche Vorteil der vorliegenden Erfindung ist darin zu sehen, dass die spätere Endfixierung, also die kraftschlüssige Verbindung der elektrischen Leiter, im Grunde ausschließlich auf der Verschraubung der beiden Befestigungselemente basiert. Daher können die mechanischen Eigenschaften der Verbindungsanordnung unabhängig von den elektrischen Eigenschaften festgelegt werden. Beispielsweise kann für die Befestigungselemente ein härteres Material vorgesehen sein als für die elektrischen Leiter, für die hingegen ein Material mit vorteilhaften Eigenschaften für die Stromübertragung gewählt werden kann.

In einer vorteilhaften Weiterbildung der Erfindung, die vorstehend bereits als "erste Variante" bezeichnet wurde, kann vorgesehen sein, dass das zweite Befestigungselement einen Schaftabschnitt aufweist und in der Art eines Schraubenelements ausgebildet ist, vorzugsweise stift- bzw. bolzenförmig ausgebildet ist. Das erste Befestigungselement kann dann vorzugsweise hülsenförmig ausgebildet sein, beispielsweise in der Art einer Schraubenmutter. Das zweite Befestigungselement kann daher unter Verwendung der primären Gewindeverbindung in das erste Befestigungselement einschraubbar sein.

Das erste Befestigungselement kann somit ein primäres Innengewinde für die primäre Gewindeverbindung mit dem zweiten Befestigungselement aufweisen.

Das primäre Innengewinde des ersten Befestigungselements, insbesondere des hülsenförmigen ersten Befestigungselements, erstreckt sich vorzugsweise zumindest abschnittsweise durch den Schaftabschnitt des ersten Befestigungselements, insbesondere ausgehend von dem Ende des Schaftabschnitts, das dem zweiten Befestigungselement für die Montage zugewandt ist. Das primäre Innengewinde kann sich vollständig, vorzugsweise aber nur abschnittsweise, durch das erste Befestigungselement oder dessen Schaftabschnitt erstrecken.

In einer Weiterbildung der Erfindung, die vorstehend bereits als "zweite Variante" bezeichnet wurde, kann alternativ vorgesehen sein, dass das zweite Befestigungselement hülsenförmig ausgebildet ist, beispielsweise in der Art einer Schraubenmutter. Das erste Befestigungselement kann dann vorzugsweise stift- oder bolzenförmig ausgebildet sein, beispielsweise in der Art eines Schraubenelements. Das erste Befestigungselement kann daher unter Verwendung der primären Gewindeverbindung in das zweite Befestigungselement einschraubbar sein.

Das erste Befestigungselement kann somit ein primäres Außengewinde für die primäre Gewindeverbindung mit dem zweiten Befestigungselement aufweisen.

Das primäre Außengewinde des ersten Befestigungselements, insbesondere des bolzenförmigen ersten Befestigungselements, erstreckt sich vorzugsweise zumindest teilweise entlang des Schaftabschnittes des ersten Befestigungselements, insbesondere ausgehend von dem Ende des Schaftabschnitts, das dem zweiten Befestigungselement für die Montage zugewandt ist. Es kann vorgesehen sein, dass der Schaftabschnitt mit dem primären Außengewinde aus dem Durchbruch des ersten elektrischen Leiters in Richtung des zweiten elektrischen Leiters herausragt, wenn sich das erste Befestigungselement in seinem montierten Zustand in dem Durchbruch des ersten elektrischen Leiters befindet.

Das primäre Innengewinde des ersten Befestigungselements kann zumindest teilweise in demselben axialen Abschnitt entlang einer Mittelachse des ersten Befestigungselements angeordnet sein, an dem sich auch die mechanische Verbindungsschnittstelle für die verliersichere Verbindung befindet. Es kann also beispielsweise vorgesehen sein, dass das primäre Innengewinde zumindest abschnittsweise in demselben axialen Abschnitt wie das nachfolgend noch genannte sekundäre Außengewinde der Verbindungsschnittstelle angeordnet ist.

Alternativ kann auch vorgesehen sein, dass das primäre Außengewinde des ersten Befestigungselements an einem anderen axialen Abschnitt angeordnet ist wie die mechanischen Verbindungsschnittstelle, insbesondere also nicht in einem mit dem sekundären Außengewinde überlappenden axialen Abschnitt. Das primäre Außengewinde ist vorzugsweise dem Ende des ersten Befestigungselements zugeordnet, das dem zweiten Befestigungselement zugewandt ist, wobei das sekundäre Außengewinde hingegen an dem von dem zweiten Befestigungselement abgewandten Ende angeordnet sein kann.

Gemäß einer Weiterbildung der Erfindung kann vorgesehen sein, dass der Schaftabschnitt des ersten Befestigungselements die mechanische Verbindungsschnittstelle aufweist, um die verliersichere Verbindung mit dem ersten elektrischen Leiter einzugehen, vorzugsweise innerhalb dessen Durchbruchs.

Die mechanische Verbindungsschnittstelle kann allerdings auch an einem von dem Schaftabschnitt verschiedenen Abschnitt des ersten Befestigungselements ausgebildet sein, also beispielsweise auch im Bereich der Abstützfläche, innerhalb der Abstützfläche oder ausgehend von der Abstützfläche. Beispielsweise kann die Verbindungsschnittstelle als mit dem ersten elektrischen Leiter verrastbare Erhebung oder Vertiefung auf der Abstützfläche ausgebildet sein. Vorzugsweise ist die mechanische Verbindungsschnittstelle allerdings entlang des Schaftabschnittes ausgebildet.

Gemäß einer Weiterbildung der Erfindung kann vorgesehen sein, dass die mechanische Verbindungsschnittstelle auf der dem zweiten elektrischen Leiter zugewandten Seite nicht aus dem Durchbruch des ersten elektrischen Leiters austritt, wenn sich die Abstützfläche des ersten Befestigungselements an dem ersten elektrischen Leiter abstützt bzw. wenn sich das erste Befestigungselement in seinem montierten Zustand befindet.

Eine nicht aus dem Durchbruch austretende Verbindungsschnittstelle kann insbesondere vorteilhaft sein, wenn es sich bei dem ersten Befestigungselement um ein hülsenförmiges Befestigungselement handelt, also beispielsweise in der Art einer Schraubenmutter. In diesem Fall kann auch bei geometrischen Toleranzen sichergestellt sein, dass keine mechanische Beeinflussung des zweiten elektrischen Leiters oder dessen Kontaktfläche im Rahmen der kraftschlüssigen Verbindung durch das erste Befestigungselement erfolgt. Die beiden elektrischen Leiter vermögen also auch im Falle von Toleranzen noch plan bzw. flächig aufeinander aufzuliegen.

Gemäß einer bevorzugten Weiterbildung der Erfindung kann vorgesehen sein, dass die mechanische Verbindungsschnittstelle die verliersichere Verbindung mittels einer sekundären Gewindeverbindung mit dem ersten elektrischen Leiter ausbildet bzw. realisiert.

Insbesondere (aber nicht ausschließlich) durch die sekundäre Gewindeverbindung kann sichergestellt sein, dass das erste Befestigungselement bereits im Rahmen einer Vormontage oder eines ersten Montageschrittes verliersicher mit dem ersten elektrischen Leiter verbindbar ist.

Auf vorteilhafte Weise kann die sekundäre Gewindeverbindung eine ausreichende Drehmomentabstützung beim Verschrauben der beiden Befestigungselemente gewährleisten. Der Montageaufwand der Verbindungsanordnung bzw. des Verbindungssystems kann dadurch noch weiter verringert werden, da ein Verschrauben der beiden Befestigungselemente bei dieser Weiterbildung ohne weitere Maßnahmen, wie beispielsweise ein Gegenhalten mit einem zusätzlichen Schraubwerkzeug, möglich ist. Insofern eine sekundäre Gewindeverbindung zwischen dem ersten Befestigungselement und dem ersten elektrischen Leiter vorgesehen ist, kann die Montage des ersten Befestigungselements für den Monteur daher besonders einfach und komfortabel sein.

In einer Weiterbildung der Erfindung kann vorgesehen sein, dass die mechanische Verbindungsschnittstelle des ersten Befestigungselements innerhalb des Durchbruchs des ersten elektrischen Leiters die sekundäre Gewindeverbindung mit dem ersten elektrischen Leiter ausbildet.

Vorzugsweise sind die Drehrichtungen der sekundären Gewindeverbindung und der primären Gewindeverbindung einander entgegengesetzt. Auf diese Weise kann sich die sekundäre Gewindeverbindung während des gegenseitigen Verschraubens der beiden Befestigungselemente noch weiter in dem ersten elektrischen Leiter festziehen - oder zumindest nicht gelockert werden. Auch gleichlaufende Drehrichtungen können aber gegebenenfalls vorgesehen sein (weniger bevorzugt), insbesondere wenn die sekundäre Gewindeverbindung eine höhere Haltekraft bzw. Selbsthemmung aufweist als die primäre Gewindeverbindung, so dass sich die Verschraubung der sekundären Gewindeverbindung beim Anziehen der primären Gewindeverbindung ebenfalls nicht unbeabsichtigt löst.

Insbesondere kann vorgesehen sein, dass die Drehrichtung der primären Gewindeverbindung rechtsdrehend (in Bezug auf die Einschraubrichtung des zweiten Befestigungselements) und die Drehrichtung der sekundären Gewindeverbindung linksdrehend (in Bezug auf die Einschraubrichtung des ersten Befestigungselements) verläuft.

Bei der primären Gewindeverbindung und/oder bei der sekundären Gewindeverbindung kann es sich insbesondere um ein metrisches Normgewinde handeln, beispielsweise M3, M4, M5, M6, M7 oder M8. Die primäre Gewindeverbindung weist vorzugsweise einen geringeren Querschnitt auf als die sekundäre Gewindeverbindung. Bei der primären Gewindeverbindung kann es sich beispielsweise um ein metrisches M5-Gewinde und bei der sekundären Gewindeverbindung um ein metrisches M7- oder M8-Gewinde handeln.

An dieser Stelle sei erwähnt, dass alternativ oder ergänzend zu einer sekundären Gewindeverbindung in Sonderfällen (weniger bevorzugt) auch eine verdrehsichere Verbindung vorgesehen sein kann - ergänzend zu der verliersicheren Verbindung. Beispielsweise können die mechanische Verbindungsschnittstelle des ersten Befestigungselements und/oder der erste elektrische Leiter, insbesondere innerhalb des Durchbruchs, zueinander korrespondierende polygonale Querschnitte aufweisen. Auch Sicherungsstifte, Rastelemente oder Ähnliches können zur Bereitstellung eines zusätzlichen Verdrehschutzes des ersten Befestigungselements relativ zu dem ersten elektrischen Leiter vorgesehen sein.

In einer Weiterbildung der Erfindung kann vorgesehen sein, dass die mechanische Verbindungsschnittstelle des ersten Befestigungselements ein selbstfurchendes, sekundäres Außengewinde aufweist, um ein korrespondierendes, sekundäres Innengewinde in den Durchbruch des ersten elektrischen Leiters einzuschneiden.

Dadurch, dass das sekundäre Innengewinde durch den Einschraubvorgang des ersten Befestigungselements in dem Durchbruch eingeschnitten wird, kann ein zusätzlicher Montage- oder Herstellungsschritt zum Einbringen des sekundären Innengewindes eingespart werden. Dies kann die Herstellungs- und Montagekosten sowie die Gefahr einer Beschädigung des ersten elektrischen Leiters weiter verringern. Grundsätzlich kann allerdings auch vorgesehen sein, dass der Durchbruch des ersten elektrischen Leiters bereits ein sekundäres Innengewinde aufweist, bevor das erste Befestigungselement in dem Durchbruch montiert wird.

Das selbstfurchende, sekundäre Außengewinde des ersten Befestigungselements kann vorzugsweise einen bis zehn Gewindegänge, besonders bevorzugt einen bis fünf Gewindegänge, ganz besonders bevorzugt zwei bis drei Gewindegänge, aufweisen.

Bei Verwendung eines selbstfurchenden sekundären Außengewindes des ersten Befestigungselements als mechanische Verbindungsschnittstelle kann optional vorgesehen sein, zwischen dem ersten Befestigungselement und dem ersten elektrischen Leiter innerhalb des Durchbruchs eine oder mehrere Spänefallen vorzusehen. Dabei kann es sich insbesondere um Bereiche zwischen dem ersten Befestigungselement und dem ersten elektrischen Leiter handeln, in denen sich der Span des Gewindeschneidens ansammeln und gegebenenfalls auch im späteren Betrieb verbleiben kann. Eine Spänefalle kann sich beispielsweise unmittelbar an die Abstützfläche des ersten Befestigungselements anschließen und/oder im Bereich des von der Abstützfläche abgewandten Endes des ersten Befestigungselements ausgebildet sein. Die Spänefalle kann im montierten Zustand des ersten Befestigungselements innerhalb des Durchbruchs des ersten elektrischen Leiters vorzugsweise auch vollständig geschlossen sein, so dass die Späne innerhalb der Spänefalle sicher verbleiben und nicht unbeabsichtigt austreten.

Die Spänefalle ist im Grunde allerdings optional, da je nach Ausgestaltung des selbstfurchenden Außengewindes und der verwendeten Materialien für den elektrischen Leiter und das Befestigungselement anfallender Span ohnehin verhindert oder zumindest minimiert sein kann.

In einer vorteilhaften Weiterbildung der Erfindung kann vorgesehen sein, dass das erste Befestigungselement und das zweite Befestigungselement jeweils eine mechanische Schnittstelle zur Verbindung mit einem Schraubwerkzeug aufweisen, um ein Drehmoment von dem Schraubwerkzeug auf das jeweilige Befestigungselement zu übertragen.

Vorzugsweise ist derselbe Schnittstellentyp für die mechanische Schnittstelle beider Befestigungselemente vorgesehen. Dadurch, dass für die beiden Befestigungselemente derselbe Schnittstellentyp verwendet wird, kann die Montage für den Monteur weiter vereinfacht sein, da lediglich ein einziges Schraubwerkzeug für die Montage ausreichend ist.

Vorzugsweise ist die mechanische Schnittstelle des ersten Befestigungselements und/oder des zweiten Befestigungselements innerhalb des jeweiligen Befestigungselements versenkt. Es kann allerdings auch eine außenseitige mechanische Schnittstelle vorgesehen sein.

Bei der mechanischen Schnittstelle kann es sich grundsätzlich um einen beliebigen Schraubenkopfantrieb handeln, vorzugsweise um einen Innensechskant, ein Schlitzprofil oder Kreuzschlitzprofil. Auch ein Außensechskant, Außenvierkant oder ein sonstiger Schraubenkopfantrieb kann grundsätzlich vorgesehen sein.

In einer Weiterbildung der Erfindung kann vorgesehen sein, dass das erste Befestigungselement und das zweite Befestigungselement jeweils aus einem Material mit höherer mechanischer Festigkeit ausgebildet sind als der erste elektrische Leiter und/oder der zweite elektrische Leiter.

Vorzugsweise ist das erste Befestigungselement und/oder das zweite Befestigungselement aus Stahl ausgebildet. Die elektrischen Leiter können beispielsweise aus Kupfer, Aluminium oder einer Legierung aus den genannten Metallen ausgebildet sein.

An dieser Stelle sei erwähnt, dass eine elektrische Verbindung optional auch über einen sekundären Strompfad vorgesehen sein kann, der durch die beiden Befestigungselemente verläuft, auch wenn sich die Befestigungselemente in der Regel weniger gut für eine hohe Stromübertragung eignen als die Kontaktflächen der elektrischen Leiter.

In einer vorteilhaften Weiterbildung der Erfindung kann vorgesehen sein, dass das zweite Befestigungselement stift- bzw. bolzenförmig ausgebildet ist, beispielsweise als Schraube bzw. Schraubenelement.

Das zweite Befestigungselement, insbesondere das bolzenförmige zweite Befestigungselement, kann durch einen Durchbruch des zweiten elektrischen Leiters hindurchführbar und mit dem in Montagerichtung vorderen Endabschnitt bzw. Schaftabschnitt in das erste Befestigungselement einschraubbar sein, wenn das erste Befestigungselement in dem Durchbruch des ersten elektrischen Leiters aufgenommen ist bzw. sich in seinem montierten Zustand befindet. Die Verschraubung mit dem ersten Befestigungselement kann innerhalb des Durchbruchs des zweiten elektrischen Leiters, innerhalb des Durchbruchs des ersten elektrischen Leiters und/oder in einem Bereich zwischen den beiden elektrischen Leitern vorgesehen sein (letzteres insbesondere, wenn die kraftschlüssige Verbindung der elektrischen Leiter mittelbar erfolgt, beispielsweise über die nachfolgend noch genannte Kontakthülse).

In einer Weiterbildung der Erfindung kann auch vorgesehen sein, dass das zweite Befestigungselement hülsenförmig ausgebildet ist, beispielsweise als Schraubenmutter.

Das zweite Befestigungselement, insbesondere das hülsenförmige zweite Befestigungselement, kann auf ein aus einem Durchbruch des zweiten elektrischen Leiters herausragendes, primäres Außengewinde des ersten Befestigungselements aufschraubbar sein, wenn das erste Befestigungselement in dem Durchbruch des ersten elektrischen Leiters (und vorzugsweise außerdem auch in dem Durchbruch des zweiten elektrischen Leiters) aufgenommen ist bzw. wenn sich das erste Befestigungselement in seinem montierten Zustand befindet.

An dieser Stelle sei erwähnt, dass die Abstützfläche der Befestigungselemente nicht unbedingt an einem Kopfabschnitt des Befestigungselements ausgebildet sein muss. Es kann im Rahmen der Erfindung auch vorgesehen sein, beispielsweise eine stirnseitige Fläche des ersten Befestigungselements und/oder des zweiten Befestigungselements als Anschlagfläche zu verwenden, beispielsweise um den jeweiligen elektrischen Leiter an einer Stufe bzw. an einem Absatz innerhalb eines der Durchbrüche zu kontaktieren.

Die Erfindung betrifft auch ein Verbindungssystem, insbesondere ein Verbindungssystem für die Hochvolttechnik, aufweisend eine Verbindungsanordnung gemäß den vorstehenden und nachfolgenden Ausführungen, den ersten elektrischen Leiter und den zweiten elektrischen Leiter.

Das erste Befestigungselement kann in den Durchbruch des ersten elektrischen Leiters eingeführt und mit dem zweiten Befestigungselement über die gemeinsame primäre Gewindeverbindung verbunden sein.

Optional kann das zweite Befestigungselement in einen Durchbruch des zweiten elektrischen Leiters eingeführt sein, wenn die Befestigungselemente miteinander verbunden sind. Alternativ ist gegebenenfalls aber auch eine seitliche Anordnung des zweiten Befestigungselements neben dem zweiten elektrischen Leiter möglich, bei der kein Durchbruch vorgesehen ist. Das zweite Befestigungselement kann beispielsweise in einem seitlichen Schlitz bzw. einer Kerbe oder in einer seitlichen Halteklammer oder einer sonstigen Befestigungseinrichtung des zweiten elektrischen Leiters angeordnet sein.

In einer vorteilhaften Weiterbildung der Erfindung kann vorgesehen sein, dass der Durchbruch des ersten elektrischen Leiters koaxial zu dem Durchbruch des zweiten elektrischen Leiters angeordnet ist.

Der Durchbruch des zweiten elektrischen Leiters weist vorzugsweise eine kleinere Querschnittsgeometrie auf als der Durchbruch des ersten elektrischen Leiters. Es kann gegebenenfalls aber auch vorgesehen sein, dass der Durchbruch des zweiten elektrischen Leiters eine größere oder identische Querschnittsgeometrie aufweist wie der Durchbruch des ersten elektrischen Leiters.

Vorzugsweise weist der Durchbruch des zweiten elektrischen Leiters eine größere Querschnittserstreckung auf als das erste Befestigungselement und/oder als das zweite Befestigungselement (insbesondere größer als das erste Befestigungselement). Der Durchbruch des zweiten elektrischen Leiters kann beispielsweise als übergroße Durchgangsbohrung oder als Langloch ausgebildet sein. Auf diese Weise können Toleranzen vorteilhaft ausgeglichen werden.

In einer vorteilhaften Weiterbildung der Erfindung kann vorgesehen sein, dass der Durchbruch des ersten elektrischen Leiters und/oder der Durchbruch des zweiten elektrischen Leiters als runde Durchgangsbohrung ausgebildet sind.

Der Durchbruch des zweiten elektrischen Leiters ist vorzugsweise als gewindefreie Durchgangsbohrung ausgebildet. Vorzugsweise weist der Durchbruch des zweiten elektrischen Leiters auch im montierten Zustand kein Innengewinde auf. Es ist also vorzugsweise auch nicht vorgesehen, ein Innengewinde in den Durchbruch im Rahmen der Montage einzuschneiden, wie dies optional bei dem Durchbruch des ersten elektrischen Leiters vorgesehen sein kann.

Bei dem Durchbruch des ersten Leiters und/oder des zweiten Leiters handelt es sich vorzugsweise um einen nicht gestuften Durchbruch bzw. um eine nicht gestufte, glatte Bohrung. Es kann gegebenenfalls aber auch ein stufiger Durchbruch bzw. eine stufige Bohrung mit verschiedenen Innenquerschnitten vorgesehen sein, um beispielsweise Abstützkanten bereitzustellen.

In einer Weiterbildung der Erfindung kann vorgesehen sein, dass das Verbindungssystem eine zwischen dem ersten elektrischen Leiter und dem zweiten elektrischen Leiter angeordnete elektrische Kontakthülse aufweist, um eine mittelbare elektrische und mechanische Verbindung zwischen dem ersten elektrischen Leiter und dem zweiten elektrischen Leiter herzustellen, wenn sich das erste Befestigungselement mit dem zweiten Befestigungselement in dem verschraubten Zustand befindet.

Die Verwendung einer Kontakthülse zur Verbindung der beiden elektrischen Leiter kann eine Alternative zu einer unmittelbaren Kontaktierung der jeweiligen Kontaktflächen der elektrischen Leiter darstellen. Anstelle einer Kontakthülse kann grundsätzlich ein beliebiges elektrisch leitfähiges Zwischenelement vorgesehen sein. Auch mehrere Kontakthülsen oder sonstige elektrisch leitfähige Zwischenelemente können grundsätzlich zwischen den elektrischen Leitern angeordnet und durch Verschrauben der Befestigungselemente kraftschlüssig verspannt werden.

Die zusätzliche elektrische Kontakthülse kann unter anderem vorgesehen sein, um die elektrischen Eigenschaften bei der Verbindung der elektrischen Leiter gezielt zu beeinflussen, ein definiertes Abstandsmaß zwischen den elektrischen Leitern zu überbrücken und/oder um die geometrischen Bedingungen zur Ergänzung des Verbindungssystems mit einer Berührschutzvorrichtung herzustellen, so dass beispielsweise isolierende Gehäusekomponenten für die elektrischen Leiter verwendbar sind.

Es kann vorgesehen sein, dass die mechanische Verbindungsschnittstelle des ersten Befestigungselements in dem montierten Zustand des ersten Befestigungselements auf der dem zweiten elektrischen Leiter zugewandten Seite aus dem Durchbruch des ersten elektrischen Leiters aus- und in die Kontakthülse eintritt. Optional kann die mechanische Verbindungsschnittstelle auch die verliersichere Verbindung, vorzugsweise die sekundäre Gewindeverbindung, bis in die Kontakthülse verlängern. Somit kann beispielsweise ein vormontierter, verliersicherer Zustand zwischen erstem Befestigungselement, dem erstem elektrischen Leiter und der Kontakthülse bereitgestellt werden. Beispielsweise kann das selbstfurchende, sekundäre Außengewinde des ersten Befestigungselements ein korrespondierendes sekundäres Innengewinde innerhalb der Kontakthülse einschneiden.

Die mechanische Schnittstelle kann grundsätzlich aber auch ausschließlich auf die Verbindung mit dem ersten elektrischen Leiter beschränkt sein. In diesem Fall ist die Innenquerschnittsgeometrie der Kontakthülse vorzugsweise größer als die Außenquerschnittsgeometrie des ersten Befestigungselements in dem Endabschnitt bzw. Schaftabschnitt, der in die Kontakthülse hineinragt.

Die Erfindung betrifft auch ein Verfahren zur Verbindung eines ersten elektrischen Leiters mit einem zweiten elektrischen Leiter, aufweisend zumindest die folgenden Verfahrensschritte:
- Bereitstellen eines ersten Befestigungselements, das eine Abstützfläche und eine mechanische Verbindungsschnittstelle für eine verliersichere Verbindung mit dem ersten elektrischen Leiter, vorzugsweise für eine sekundäre Gewindeverbindung mit dem ersten elektrischen Leiter, aufweist;
- Einführen des ersten Befestigungselements in einen Durchbruch des ersten elektrischen Leiters, bis die verliersichere Verbindung, vorzugsweise die sekundäre Gewindeverbindung, des ersten Befestigungselements mit dem ersten elektrischen Leiter hergestellt ist;
- Bereitstellen eines zweiten Befestigungselements, das eine Abstützfläche aufweist; und
- Verschrauben des zweiten Befestigungselements mit dem ersten Befestigungselement über eine gemeinsame primäre Gewindeverbindung, bis sich die Abstützfläche des zweiten Befestigungselements auf einer von dem ersten elektrischen Leiter abgewandten Seite des zweiten elektrischen Leiters abstützt und der erste elektrische Leiter und der zweite elektrische Leiter kraftschlüssig und elektrisch miteinander verbunden sind.

Im Rahmen des Verfahrensschrittes des Einführens des ersten Befestigungselements in den Durchbruch des ersten elektrischen Leiters kann vorgesehen sein, dass das erste Befestigungselement so weit in den Durchbruch des ersten elektrischen Leiters eingeführt wird, bis sich dessen Abstützfläche auf einer von dem zweiten elektrischen Leiter abgewandten Seite des ersten elektrischen Leiters abstützt. Alternativ kann auch vorgesehen sein, dass die Abstützfläche nach dem Einführen des ersten Befestigungselements zunächst noch von dem ersten elektrischen Leiter beabstandet ist - beispielsweise kann dann das spätere Verschrauben mit dem zweiten Befestigungselement (oder ein sonstiger nachfolgender Verfahrensschritt) dazu führen, dass das erste Befestigungselement weiter in den Durchbruch des ersten elektrischen Leiters eindringt, bis die Abstützfläche an dem ersten elektrischen Leiter anliegt.

Beispielsweise kann ein als Buchse oder Schraubenelement ausgebildetes erstes Befestigungselement in einem ersten Montageschritt, beispielsweise einem Vormontageschritt, in den Durchbruch des ersten elektrischen Leiters eingeführt werden - vorzugsweise, aber nicht notwendigerweise, bis zum Anschlagen der Abstützfläche. Das erste Befestigungselement kann dabei optional über ein selbstfurchendes oder metrisches Außengewinde innerhalb des Durchbruchs des elektrischen Leiters axial und radial gesichert werden. Durch diesen Montageschritt kann im Grunde eine Anschraubbuchse oder ein Stehbolzen in dem ersten elektrischen Leiter bereitgestellt werden, ohne unmittelbar Einfluss auf die Kontaktfläche des ersten elektrischen Leiters zu nehmen, wodurch eine Beschädigung der Kontaktfläche vermieden werden kann. Im Anschluss kann in einem zweiten Montageschritt, beispielsweise einem Endmontageschritt, das zweite Befestigungselement so mit dem zweiten elektrischen Leiter verbunden und mit dem ersten Befestigungselement verschraubt werden, dass die beiden elektrischen Leiter kraftschlüssig miteinander verbunden werden.

Auf jegliches Verpressen, Einpressen oder Vernieten kann im Rahmen der Erfindung vorteilhaft verzichtet werden. Spannungsrisse an den beteiligten Bauteilen können dadurch vermieden werden.

An dieser Stelle sei betont, dass die Verfahrensschritte nicht unbedingt in der Reihenfolge durchgeführt werden müssen, in der sie in der Beschreibung oder in den Patentansprüchen erstmals beschrieben oder erwähnt sind. Es können daher beispielsweise einzelne Verfahrensschritte oder Gruppen von Verfahrensschritten untereinander austauschbar sein, wenn dies technisch nicht ausgeschlossen ist. Auch können Verfahrensschritte miteinander kombiniert, in separate Zwischenschritte aufgeteilt oder mit Zwischenschritten ergänzt werden. Das Verfahren ist mit den vorliegend genannten Verfahrensschritten auch nicht unbedingt abschließend beschrieben und kann mit weiteren, auch nicht aufgeführten Verfahrensschritten ergänzt werden.

Merkmale, die im Zusammenhang mit einem der Gegenstände der Erfindung, namentlich gegeben durch die erfindungsgemäße Verbindungsanordnung, das erfindungsgemäße Verbindungssystem und das erfindungsgemäße Verfahren beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: ein Verbindungssystem gemäß einem ersten Ausführungsbeispiel der Erfindung, aufweisend eine zweiteilige Verbindungsanordnung und zwei elektrische Leiter, in einer geschnittenen Seitenansicht während der Montage;
- Figur 2: die Verbindungsanordnung gemäß Figur 1 in einem montierten Zustand, in einer geschnittenen perspektivischen Darstellung;
- Figur 3: eine Ausschnittsvergrößerung der mit dem ersten elektrischen Leiter verbundenen mechanischen Verbindungsschnittstelle des ersten Befestigungselements der Verbindungsanordnung gemäß Figur 2;
- Figur 4: ein Verbindungssystem gemäß einem zweiten Ausführungsbeispiel der Erfindung in einem montierten Zustand, in einer geschnittenen perspektivischen Darstellung;
- Figur 5: ein Verbindungssystem gemäß einem dritten Ausführungsbeispiel der Erfindung in einem montierten Zustand, in einer geschnittenen Seitenansicht; und
- Figur 6: ein Verbindungssystem gemäß einem vierten Ausführungsbeispiel der Erfindung in einem montierten Zustand, in einer geschnittenen Seitenansicht.

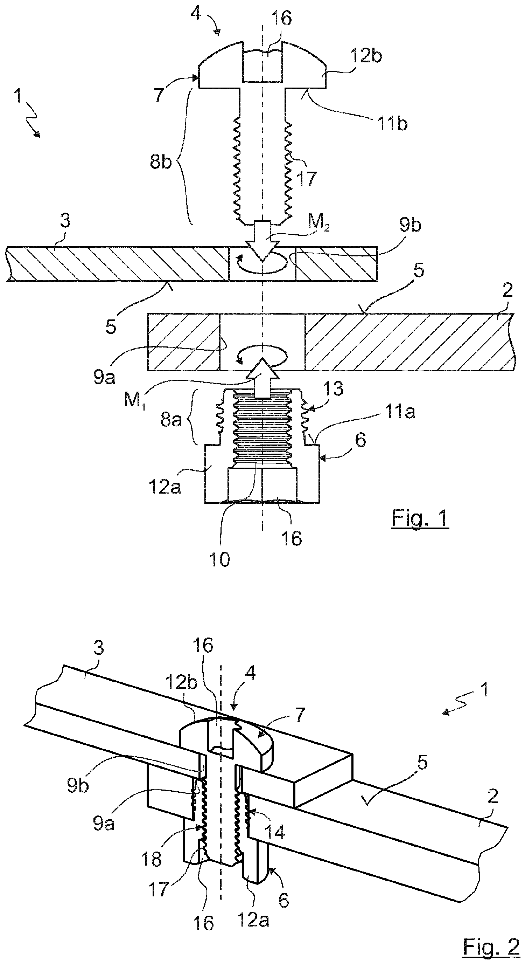

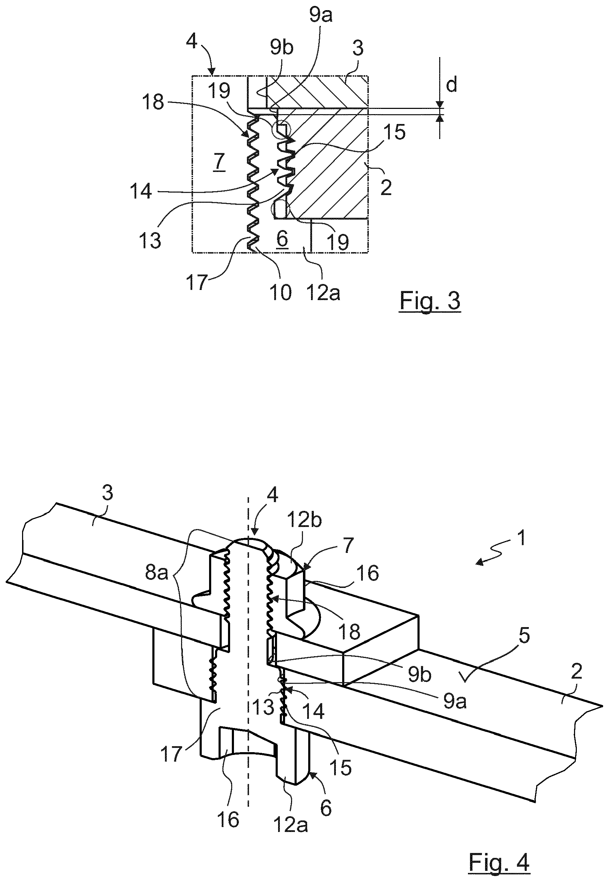

In den Figuren 1 bis 3 ist ein Verbindungssystem 1 gemäß einem ersten Ausführungsbeispiel der Erfindung dargestellt. Das in den Ausführungsbeispielen beschriebene Verbindungssystem 1 eignet sich insbesondere zur Verwendung in der Hochvolttechnik, kann grundsätzlich aber in der gesamten Elektrotechnik Anwendung finden. In Figur 1 ist ein demontierter Zustand des Verbindungssystems 1 in einer geschnittenen Seitenansicht und in Figur 2 ein montierter Zustand in einer perspektivischen Schnittdarstellung gezeigt. Figur 3 zeigt einen vergrößerten Ausschnitt im montierten Zustand.

Das Verbindungssystem 1 weist einen ersten elektrischen Leiter 2 und einen zweiten elektrischen Leiter 3 auf, sowie eine Verbindungsanordnung 4, um die beiden elektrischen Leiter 2, 3 kraftschlüssig und elektrisch miteinander zu verbinden. Bei den elektrischen Leitern 2, 3 kann es sich beispielsweise um Hochvoltkontaktelemente handeln, insbesondere um Stromschienen oder Kabelschuhe.

Es ist vorgesehen, zwei sich gegenüberliegende, jeweilige Kontaktflächen 5 (vgl. Figur 1) der elektrischen Leiter 2, 3 flächig gegeneinander zu pressen, wobei grundsätzlich eine beliebige Kontaktierung, also beispielsweise auch eine stirnseitige oder sonstige Kontaktierung der elektrischen Leiter 2, 3 vorgesehen sein kann.

Die Verbindungsanordnung 4 weist ein erstes Befestigungselement 6 und ein zweites Befestigungselement 7 auf. Das erste Befestigungselement 6 ist mit einem in Montagerichtung M, vorneliegenden, also dem zweiten Befestigungselement 7 zugewandten, Schaftabschnitt 8a in einen Durchbruch 9a des ersten elektrischen Leiters 2 einführbar. Bei dem Durchbruch 9a des ersten elektrischen Leiters 9 handelt es sich im Ausführungsbeispiel um eine runde, gewindefreie Durchgangsbohrung.

In dem in den Figuren 1 bis 3 sowie 5 gezeigten Ausführungsbeispielen ist das erste Befestigungselement 6 beispielhaft hülsenförmig ausgebildet, in der Art einer Schraubenmutter. Das erste Befestigungselement 6 weist dementsprechend ein primäres Innengewinde 10 auf. Das primäre Innengewinde 10 erstreckt sich entlang des Schaftabschnitts 8a, der sich unmittelbar an eine Abstützfläche 11a (vgl. Figur 1) anschließt, die an der Stirnseite einer Schulter eines Kopfabschnittes 12a (schraubenkopfartige Ausformung) des ersten Befestigungselements 6 ausgebildet ist. Das erste Befestigungselement 6 vermag sich mit besagter Abstützfläche 11a auf der von dem zweiten elektrischen Leiter 3 abgewandten Seite des ersten elektrischen Leiters 2 abzustützen, wenn sich das erste Befestigungselement 6 in seinem in dem Durchbruch 9a des ersten elektrischen Leiters 2 montierten Zustand befindet.

Das erste Befestigungselement 6 weist außerdem eine mechanische Verbindungsschnittstelle 13 für eine verliersichere Verbindung mit dem ersten elektrischen Leiter 2 auf. Bei der verliersicheren Verbindung handelt es sich vorzugsweise um eine sekundäre Gewindeverbindung 14 mit dem ersten elektrischen Leiter 2. Die mechanische Verbindungsschnittstelle 13 ist in den Ausführungsbeispielen als selbstfurchendes, sekundäres Außengewinde 13 ausgebildet, mit dem ein korrespondierendes, sekundäres Innengewinde 15 (vgl. Figur 3) in den Durchbruch 9a bzw. die Durchgangsbohrung des ersten elektrischen Leiters 2 eingeschnitten werden kann. Die mechanische Verbindungsschnittstelle 13 des ersten Befestigungselements 6 bildet somit innerhalb des Durchbruchs 9a des ersten elektrischen Leiters 2 mit dem ersten elektrischen Leiter 2 die sekundäre Gewindeverbindung 14 aus.

Die mechanische Verbindungsschnittstelle 13 bzw. das selbstfurchende, sekundäre Außengewinde 13 ist entlang des Schaftabschnitts 8a ausgebildet und in dem montierten Zustand des ersten Befestigungselements 6 innerhalb des Durchbruchs 9a bzw. der Durchgangsbohrung des ersten elektrischen Leiters 2 angeordnet. Optional kann ein Sicherheitsabstand d zwischen dem in Montagerichtung M, vorderen Ende des Schaftabschnitts 8a und dem kontaktflächenseitigen Ende des Durchbruchs 9a im montierten Zustand des ersten Befestigungselements 6 vorgesehen sein, wie in Figur 3 dargestellt. Auf diese Weise kann sichergestellt sein, dass das erste Befestigungselement 6 auch in einem toleranzbehafteten Fall nicht störend aus dem Durchbruch 9a austritt und beispielsweise die Kontaktfläche 5 des zweiten elektrischen Leiters 3 beschädigt.

Vorzugsweise kann im Rahmen eines ersten Verfahrensschrittes zur Verbindung der beiden elektrischen Leiter 2, 3 vorgesehen sein, das erste Befestigungselement 6 in den Durchbruch 9a des ersten elektrischen Leiters 2 einzuführen, bis es die verliersichere Verbindung, also insbesondere die sekundäre Gewindeverbindung 14, eingeht (vorzugsweise bis sich die Abstützfläche 11a auf einer von dem zweiten elektrischen Leiter 3 abgewandten Seiten des ersten elektrischen Leiters 2 abstützt). Um ein geeignetes Drehmoment von einem Schraubwerkzeug (nicht dargestellt) auf das erste Befestigungselement 6 zu übertragen, weist dieses vorzugsweise eine mechanische Schnittstelle 16 zur Verbindung mit dem Schraubwerkzeug auf, beispielsweise einen Innensechskantantrieb.

Das zweite Befestigungselement 7 der Verbindungsanordnung 4 weist ebenfalls eine Abstützfläche 11b auf (vgl. Figur 1), mit der es sich auf einer von dem ersten elektrischen Leiter 2 abgewandten Seite des zweiten elektrischen Leiters 3 abzustützen vermag. Das zweite Befestigungselement 7 ist in den Ausführungsbeispielen der Figuren 1 bis 3 und 5 bolzenförmig, in der Art eines Schraubenelements ausgebildet und weist ein primäres Außengewinde 17 auf, das sich entlang eines Schaftabschnitts 8b (vgl. Figur 1) des zweiten Befestigungselements 7 erstreckt. Die Abstützfläche 11b ist stirnseitig an einem Kopfabschnitt 12b des zweiten Befestigungselements 7 gebildet, der ebenfalls eine mechanische Schnittstelle 16 zur Verbindung mit einem Schraubwerkzeug aufweisen kann, vorzugsweise eine mechanische Schnittstelle 16 desselben Schnittstellentyps wie im Falle des ersten Befestigungselements 6. In den Ausführungsbeispielen sind allerdings beispielhaft verschiedene Schnittstellentypen gezeigt.

Das zweite Befestigungselement 7 ist durch einen Durchbruch 9b, in den Ausführungsbeispielen wiederum eine Durchgangsbohrung, des zweiten elektrischen Leiters 3 hindurchführbar und auf diese Weise in das erste Befestigungselement 6 einschraubbar. Das primäre Innengewinde 10 des ersten Befestigungselements 6 und das primäre Außengewinde 17 des zweiten Befestigungselements 7 bilden schließlich eine gemeinsame primäre Gewindeverbindung 18 aus, um in einem miteinander verschraubten Zustand den ersten elektrischen Leiter 2 kraftschlüssig und elektrisch mit dem zweiten elektrischen Leiter 3 zu verbinden.

Somit kann das zweite Befestigungselement 7 in einem zweiten Verfahrensschritt mit dem ersten Befestigungselement 6 über die gemeinsame primäre Gewindeverbindung 18 verbunden werden, bis sich die Abstützfläche 11b des zweiten Befestigungselements 7 auf der von dem ersten elektrischen Leiter 2 abgewandten Seite des zweiten elektrischen Leiters 3 abstützt und die beiden elektrischen Leiter 2, 3 kraftschlüssig miteinander verbunden sind.

Die primäre Gewindeverbindung 18 und die sekundäre Gewindeverbindung 14 sind vorzugsweise mit einer entgegengesetzten Drehrichtung ausgeführt, wie in Figur 1 durch entsprechende Pfeile angedeutet. Die Drehrichtung der primären Gewindeverbindung 18 kann beispielsweise entlang der Montagerichtung M₂ des zweiten Befestigungselements 7 rechtsdrehend und die Drehrichtung der sekundären Gewindeverbindung 14 entlang der Montagerichtung M, des ersten Befestigungselements 6 linksdrehend ausgebildet sein. Auf diese Weise vermag sich die sekundäre Gewindeverbindung 14 während des Einschraubens des ersten Befestigungselements 6 in das zweite Befestigungselement 7 nicht zu lockern, sondern wird im Zweifel eher noch fester mit dem ersten elektrischen Leiter 2 verschraubt.

Auf die vorgeschlagene Weise kann eine kraftschlüssige und elektrische Verbindung zwischen den beiden elektrischen Leitern 2, 3 durch die Schraubverbindung der beiden Befestigungselemente 6, 7 hergestellt werden. Das erste Befestigungselement 6 und das zweite Befestigungselement 7 sind vorzugsweise jeweils aus einem Material mit höherer mechanischer Festigkeit ausgebildet als die elektrischen Leiter 2, 3. Besonders bevorzugt sind die beiden Befestigungselemente 6, 7 aus demselben Material ausgebildet, jedoch aus einem anderen Material als die elektrischen Leiter 2, 3. Die elektrischen Leiter 2, 3 können beispielsweise aus Kupfer oder Aluminium und die Befestigungselemente 6, 7 aus Stahl ausgebildet sein. Daher können Ermüdungserscheinungen der mechanischen Verbindung selbst bei hohen Temperaturen vermieden werden.

Wie in den Ausführungsbeispielen dargestellt, kann insbesondere die Durchgangsbohrung bzw. der Durchbruch 9b des zweiten elektrischen Leiters 3 im Hinblick auf das zweite Befestigungselement 7 (oder das erste Befestigungselement 6) übergroß ausgebildet sein, beispielsweise auch als Langloch.

An dieser Stelle sei erwähnt, dass der zweite elektrische Leiter 3 nicht unbedingt einen Durchbruch 9b aufweisen muss. Grundsätzlich kann auch eine seitliche Montage des zweiten Befestigungselements 7 vorgesehen sein, optional in einer seitliche Aussparung des zweiten elektrischen Leiters 3.

Optional kann bei Verwendung des selbstfurchenden, sekundären Außengewindes 13 des ersten Befestigungselements 6 vorgesehen sein, zwischen dem ersten Befestigungselement 6 und dem ersten elektrischen Leiter 2 eine oder mehrere Spänefallen 19 vorzusehen. Dies soll anhand von Figur 3 verdeutlicht werden.

In Figur 3 sind beispielhaft zwei Hohlräume zwischen dem ersten Befestigungselement 6 und dem ersten elektrischen Leiter 2 in dem vollständig montierten Zustand angedeutet, in denen sich gegebenenfalls Späne ansammeln können. Die Hohlräume bzw. Spänefallen 19 sind durch einen Durchmessersprung innerhalb des Durchbruchs 9a des ersten elektrischen Leiters 2 und die Abstützfläche 11a des ersten Befestigungselements 6 vollständig verschlossen, so dass die Späne während des Betriebs nicht austreten können.

Anhand von Figur 4 soll ein zweites Ausführungsbeispiel eines erfindungsgemäßen Verbindungssystems 1 dargestellt werden, bei dem das erste Befestigungselement 6 bolzenförmig bzw. in der Art eines Schraubenelements ausgebildet ist. Wiederum ist ein selbstfurchendes, sekundäres Außengewinde 13 vorgesehen, um ein korrespondierendes sekundäres Innengewinde 15 in den Durchbruch 9a des ersten elektrischen Leiters 2 einzuschneiden. Die Verbindung mit dem zweiten Befestigungselement 7 erfolgt allerdings nicht innerhalb des ersten Befestigungselements 6, sondern an dem Schaftabschnitt 8a des ersten Befestigungselements 6, an dem sich ein primäres Außengewinde 17 für die primäre Gewindeverbindung 18 mit dem zweiten Befestigungselement 7 befindet. Der Querschnitt des ersten Befestigungselements 6 kann im Bereich des primären Außengewindes 17 optional verringert sein (je nach Querschnitt des Durchbruchs 9b in dem zweiten elektrischen Leiter 3). Das zweite Befestigungselement 7 kann schließlich als korrespondierende Schraubenmutter ausgebildet sein, die auf den aus dem Durchbruch 9b des zweiten elektrischen Leiters 3 im montierten Zustand herausragenden Schaftabschnitt 8a des ersten Befestigungselements 6 aufschraubbar ist.

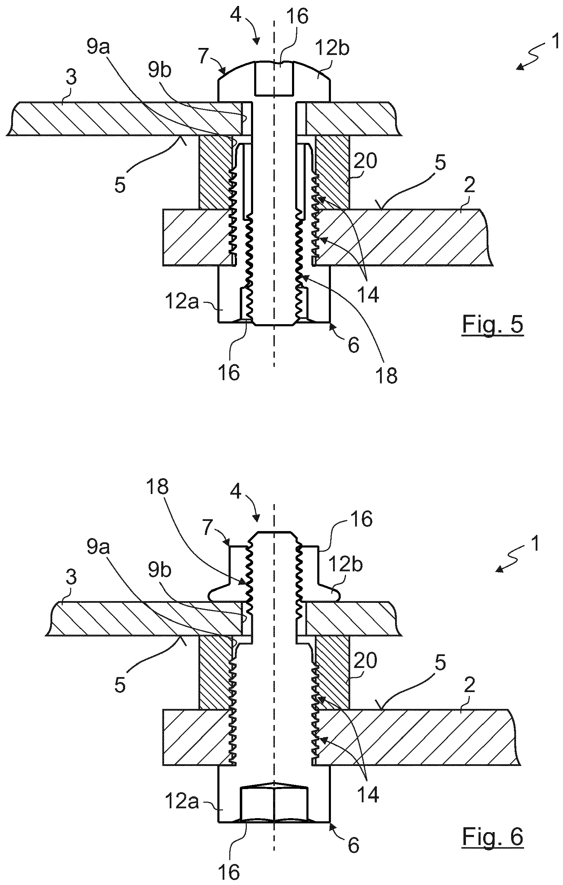

An dieser Stelle sei erwähnt, dass das zweite Befestigungselement 7, wenn dieses auf ein primäres Außengewinde 17 des ersten Befestigungselements 6 aufgeschraubt werden soll, nicht zwingend in der Art einer vollständig außerhalb des Durchbruchs 9b des zweiten elektrischen Leiters 3 angeordnete Schraubenmutter ausgebildet sein muss. Das zweite Befestigungselement 7 kann beispielsweise auch hülsenförmig ausgebildet sein, wobei sich ein axialer Abschnitt des hülsenförmigen zweiten Befestigungselements 7 dann beispielsweise auch in den Durchbruch 9b des zweiten elektrischen Leiters 2 hinein erstrecken kann, um die primäre Gewindeverbindung 18 mit dem ersten Befestigungselement 6 innerhalb des Durchbruchs 9b oder auf der dem ersten elektrischen Leiter 2 zugewandten Seite des zweiten elektrischen Leiters 3 einzugehen. Das zweite Befestigungselement 7 kann in dieser Hinsicht beispielsweise ähnlich aufgebaut sein, wie das in den Figuren 1 und 2 dargestellte, erste Befestigungselement 6. Dies gilt analog auch für die nachfolgend noch beschriebene Ausführungsform gemäß Figur 6.

Anhand der Figuren 5 und 6 sollen noch zwei weitere Ausführungsbeispiele eines erfindungsgemäßen Verbindungssystems 1 gezeigt werden. Figur 5 betrifft ein hülsenförmiges erstes Befestigungselement 6 in Kombination mit einem schraubenförmigen zweiten Befestigungselement 7 und Figur 6 ein bolzenförmiges erstes Befestigungselement 6 in Kombination mit einem als Schraubenmutter ausgebildeten zweiten Befestigungselement 7. Im Gegensatz zu den vorhergehenden Ausführungsbeispielen sind die beiden elektrischen Leiter 2, 3 nicht unmittelbar über ihre Kontaktflächen 5 miteinander verbunden. Zwischen dem ersten elektrischen Leiter 2 und dem zweiten elektrischen Leiter 3 ist eine zusätzliche elektrische Kontakthülse 20 angeordnet, um eine mittelbare elektrische und mechanische Verbindung zwischen den elektrischen Leitern 2, 3 herzustellen, wenn sich die beiden Befestigungselemente 6, 7 in ihrem verschraubten Zustand befinden.

Die Verwendung einer Kontakthülse 20 kann aus verschiedenen technischen Gründen vorteilhaft sein, beispielsweise um eine definierte Beabstandung der elektrischen Leiter 2, 3 vorzugeben.

## Patentansprüche

1. Verbindungsanordnung (4) zur Verbindung eines ersten elektrischen Leiters (2) mit einem zweiten elektrischen Leiter (3), aufweisend ein in einen Durchbruch (9a) des ersten elektrischen Leiters (2) einführbares erstes Befestigungselement (6), das eine Abstützfläche (11a) aufweist, mit der es sich auf einer von dem zweiten elektrischen Leiter (3) abgewandten Seite des ersten elektrischen Leiters (2) abzustützen vermag, und ein zweites Befestigungselement (7), das eine Abstützfläche (11b) aufweist, mit der es sich auf einer von dem ersten elektrischen Leiter (2) abgewandten Seite des zweiten elektrischen Leiters (3) abzustützen vermag, und wobei das erste Befestigungselement (6) und das zweite Befestigungselement (7) eine gemeinsame primäre Gewindeverbindung (18) ausbilden, um in einem miteinander verschraubten Zustand den ersten elektrischen Leiter (2) kraftschlüssig und elektrisch mit dem zweiten elektrischen Leiter (3) zu verbinden,
**dadurch gekennzeichnet, dass**
das erste Befestigungselement (6) eine mechanische Verbindungsschnittstelle (13) für eine verliersichere Verbindung mit dem ersten elektrischen Leiter (2) aufweist.

2. Verbindungsanordnung (4) nach Anspruch 1,
**dadurch gekennzeichne**t, dass
das erste Befestigungselement (6)
a) hülsenförmig ausgebildet ist und ein primäres Innengewinde (10) für die primäre Gewindeverbindung (18) mit dem zweiten Befestigungselement (7) aufweist, wobei sich das primäre Innengewinde (10) vorzugsweise ausgehend von dem Endabschnitt des ersten Befestigungselements (6) durch das erste Befestigungselement (6) erstreckt, der dem zweiten Befestigungselement (7) zugewandt ist; oder
b) bolzenförmig ausgebildet ist und ein primäres Außengewinde (17) für die primäre Gewindeverbindung (18) mit dem zweiten Befestigungselement (7) aufweist, wobei sich das primäre Außengewinde (17) des bolzenförmigen ersten Befestigungselements (6) zumindest teilweise entlang eines Endabschnitts des ersten Befestigungselements (6) erstreckt, der vorzugsweise an der von dem ersten elektrischen Leiter (2) abgewandten Seite aus einem Durchbruch (9b) des zweiten elektrischen Leiters (3) herausragt.

3. Verbindungsanordnung (4) nach Anspruch 1 oder 2,
**dadurch gekennzeichnet, dass**
das erste Befestigungselement (6) einen Schaftabschnitt (8a) aufweist, der sich ausgehend von der Abstützfläche (11a) in den Durchbruch (9a) des ersten elektrischen Leiters (2) erstreckt, wobei der Schaftabschnitt (8a) die mechanische Verbindungsschnittstelle (13) aufweist, um die verliersichere Verbindung mit dem ersten elektrischen Leiter (2) innerhalb dessen Durchbruchs (9a) einzugehen.

4. Verbindungsanordnung (4) nach Anspruch 3,
**dadurch gekennzeichnet, dass**
die mechanische Verbindungsschnittstelle (13) auf der dem zweiten elektrischen Leiter (3) zugewandten Seite nicht aus dem Durchbruch (9a) des ersten elektrischen Leiters (2) austritt, wenn sich die Abstützfläche (11a) des ersten Befestigungselements (6) an dem ersten elektrischen Leiter (2) abstützt.

5. Verbindungsanordnung (4) nach einem der Ansprüche 1 bis 4,
**dadurch gekennzeichnet, dass**
die mechanische Verbindungsschnittstelle (13) des ersten Befestigungselements (6) für die verliersichere Verbindung innerhalb des Durchbruchs (9a) des ersten elektrischen Leiters (2) mit dem ersten elektrischen Leiter (2) eine sekundäre Gewindeverbindung (14) ausbildet, wobei die Drehrichtungen der sekundären Gewindeverbindung (14) und der primären Gewindeverbindung (18) vorzugsweise einander entgegengesetzt sind.

6. Verbindungsanordnung (4) nach Anspruch 5,
**dadurch gekennzeichnet, dass**
die mechanische Verbindungsschnittstelle (13) des ersten Befestigungselements (6) ein selbstfurchendes, sekundäres Außengewinde aufweist, um ein korrespondierendes, sekundäres Innengewinde (15) in den Durchbruch (9a) des ersten elektrischen Leiters (2) einzuschneiden.

7. Verbindungsanordnung (4) nach einem der Ansprüche 1 bis 6,
**dadurch gekennzeichnet, dass**
das erste Befestigungselement (6) und das zweite Befestigungselement (7) jeweils eine mechanische Schnittstelle (16) zur Verbindung mit einem Schraubwerkzeug aufweisen, um ein Drehmoment von dem Schraubwerkzeug auf das jeweilige Befestigungselement (6, 7) zu übertragen, wobei vorzugsweise derselbe Schnittstellentyp in beiden Befestigungselementen (6, 7) vorgesehen ist.

8. Verbindungsanordnung (4) nach einem der Ansprüche 1 bis 7,
**dadurch gekennzeichnet, dass**
das erste Befestigungselement (6) und das zweite Befestigungselement (7) jeweils aus einem Material mit höherer mechanischer Festigkeit ausgebildet sind als der erste elektrische Leiter (2) und/oder der zweite elektrische Leiter (3), vorzugsweise aus Stahl.

9. Verbindungsanordnung (4) nach einem der Ansprüche 1 bis 8,
**dadurch gekennzeichnet, dass**
das zweite Befestigungselement (7)
a) als Schraube ausgebildet ist, die durch einen Durchbruch (9b) des zweiten elektrischen Leiters (3) hindurchführbar und in das erste Befestigungselement (6) einschraubbar ist, wenn das erste Befestigungselement (6) in dem Durchbruch (9a) des ersten elektrischen Leiters (2) aufgenommen ist; oder
b) als Schraubenmutter ausgebildet ist, die auf ein aus einem Durchbruch (9b) des zweiten elektrischen Leiters (3) herausragendes, primäres Außengewinde (17) des ersten Befestigungselements (6) aufschraubbar ist, wenn das erste Befestigungselement (6) in dem Durchbruch (9a) des ersten elektrischen Leiters (2) aufgenommen ist.

10. Verbindungssystem (1), insbesondere Verbindungssystem (1) für die Hochvolttechnik, aufweisend eine Verbindungsanordnung (4) gemäß einem der Ansprüche 1 bis 9, den ersten elektrischen Leiter (2) und den zweiten elektrischen Leiter (3), wobei das erste Befestigungselement (6) in den Durchbruch (9a) des ersten elektrischen Leiters (2) eingeführt und mit dem zweiten Befestigungselement (7) über die gemeinsame primäre Gewindeverbindung (18) verbunden ist.

11. Verbindungssystem (1) nach Anspruch 10,
**dadurch gekennzeichnet, dass**
der Durchbruch (9a) des ersten elektrischen Leiters (2) koaxial zu einem Durchbruch (9b) des zweiten elektrischen Leiters (3) angeordnet ist, durch den sich das erste Befestigungselement (6) und/oder das zweite Befestigungselement (7) erstreckt.

12. Verbindungssystem (1) nach Anspruch 10 oder 11,
**dadurch gekennzeichnet, dass**
der Durchbruch (9a) des ersten elektrischen Leiters (2) und/oder der Durchbruch (9b) des zweiten elektrischen Leiters (3) als runde Durchgangsbohrung ausgebildet sind, vorzugsweise als gewindefreie Durchgangsbohrung.

13. Verbindungssystem (1) nach einem der Ansprüche 10 bis 12,
**dadurch gekennzeichnet, dass**
der erste elektrische Leiter (2) und der zweite elektrische Leiter (3) an einer dem jeweils anderen elektrischen Leiter (2, 3) zugewandten Seite jeweils eine zur gegenseitigen Verbindung vorgesehene elektrische Kontaktfläche (5) für eine Stromübertragung aufweisen, wobei der erste elektrische Leiter (2) und der zweite elektrische Leiter (3) vorzugsweise als Hochvoltkontaktelemente ausgebildet sind, besonders bevorzugt als Stromschiene oder Kabelschuh.

14. Verbindungssystem (1) nach einem der Ansprüche 10 bis 13,
**gekennzeichnet durch**
eine zwischen dem ersten elektrischen Leiter (2) und dem zweiten elektrischen Leiter (3) angeordnete elektrische Kontakthülse (20), um eine mittelbare elektrische und mechanische Verbindung zwischen dem ersten elektrischen Leiter (2) und dem zweiten elektrischen Leiter (3) herzustellen, wenn sich das erste Befestigungselement (6) mit dem zweiten Befestigungselement (7) in dem verschraubten Zustand befindet.

15. Verfahren zur Verbindung eines ersten elektrischen Leiters (2) mit einem zweiten elektrischen Leiter (3), aufweisend zumindest die folgenden Verfahrensschritte:
a) Bereitstellen eines ersten Befestigungselements (6), das eine Abstützfläche (11a) und eine mechanische Verbindungsschnittstelle (13) für eine verliersichere Verbindung mit dem ersten elektrischen Leiter (2) aufweist;
b) Einführen des ersten Befestigungselements (6) in einen Durchbruch (9a) des ersten elektrischen Leiters (2), bis die verliersichere Verbindung mit dem ersten elektrischen Leiter (2) hergestellt ist;
c) Bereitstellen eines zweiten Befestigungselements (7), das eine Abstützfläche (11b) aufweist; und
d) Verschrauben des zweiten Befestigungselements (7) mit dem ersten Befestigungselement (6) über eine gemeinsame primäre Gewindeverbindung (18), bis sich die Abstützfläche (11b) des zweiten Befestigungselements (7) auf einer von dem ersten elektrischen Leiter (2) abgewandten Seite des zweiten elektrischen Leiters (3) abstützt und der erste elektrische Leiter (2) und der zweite elektrische Leiter (3) kraftschlüssig und elektrisch miteinander verbunden sind.
